# EUROPEAN PATENT APPLICATION

(11) **EP 4 645 401 A1**
(43) Date of publication of application: **05.11.2025**
(21) Application number: 24791662.0
(22) Date of filing: 05.01.2024
(51) Int. Cl.: H01M 4/04, H01M 4/36, H01M 4/38, H01M 4/583, H01M 4/62, H01M 10/058

(54) **BATTERY, BATTERY PREPARATION METHOD, AND ELECTRIC DEVICE**

(30) Priority: 18.04.2023 CN 202310414763
(71) Applicant: Contemporary Amperex Technology Co., Limited, Ningde, Fujian 352100 (CN)
(72) Inventor: LI, Xuan, Ningde, Fujian 352100 (CN); LIU, Huanji, Ningde, Fujian 352100 (CN); LIU, Rundie, Ningde, Fujian 352100 (CN); CHEN, Xingbu, Ningde, Fujian 352100 (CN); LING, Yangfang, Ningde, Fujian 352100 (CN); LI, Shuyin, Ningde, Fujian 352100 (CN); SUN, Xin, Ningde, Fujian 352100 (CN)
(74) Representative: Ziebig Hengelhaupt Intellectual Property Attorneys Patentanwaltskanzlei PartGmbB
(86) International application number: PCT/CN2024/070854
(87) International publication number: WO 2024/217074

(57) **Abstract**

The present application provides a battery, the preparation of a battery, and a powered device. The battery includes a negative electrode plate that includes a negative electrode current collector and an active layer. The active layer is located on at least one surface of the negative electrode current collector. The active layer includes an active substance, a gel electrolyte, and a liquid electrolyte. An expansion rate of the negative electrode plate is greater than or equal to 10%. When the active substance expands during cycling, the gel electrolyte can stably fix the liquid electrolyte in the negative electrode plate, thereby reducing the risk of squeezing-induced leakage of a liquid electrolyte solution due to the expansion of the active substance. Thus, the negative electrode plate can maintain a relatively stable kinetic performance, thereby improving the cycling performance of the battery.

## Description

### CROSS-REFERENCE TO RELATED APPLICATIONS

The present application claims priority to Chinese Patent Application No. 202310414763X filed on April 18, 2023 and entitled "BATTERY, BATTERY PREPARATION METHOD, AND POWERED DEVICE", which is incorporated herein by reference in its entirety.

### TECHNICAL FIELD

The present application relates to the technical field of secondary batteries, and in particular, to a battery, the preparation of a battery, and a powered device.

### BACKGROUND

The statement herein only provides background information related to the present application and does not necessarily constitute the prior art.

During the cycling of the battery, an active substance on a negative electrode plate exhibits volume expansion to a certain extent, which may lead to a decrease in the kinetic performance of the negative electrode plate, resulting in reduced cycling performance of the battery.

### SUMMARY

The present application provides a battery, including a negative electrode plate that includes a negative electrode current collector and an active layer. The active layer is located on at least one surface of the negative electrode current collector, the active layer includes an active substance, a gel electrolyte, and a liquid electrolyte, and an expansion rate of the negative electrode plate is greater than or equal to 10%.

In the above battery, the negative electrode plate is designed such that the active layer of the negative electrode plate includes an active substance, a gel electrolyte, and a liquid electrolyte, and a mass ratio of the gel electrolyte to the liquid electrolyte is in an appropriate range. In this case, when the active substance expands during cycling, the gel electrolyte can stably fix the liquid electrolyte in the negative electrode plate, thereby reducing the risk of squeezing-induced leakage of a liquid electrolyte solution due to the expansion of the active substance. Thus, the negative electrode plate can maintain a relatively stable kinetic performance, thereby improving the cycling performance of the battery.

In some embodiments, the expansion rate of the active substance is 10% to 100%. The expansion rate = (charging thickness - discharging thickness) / discharging thickness in which the charging thickness represents a thickness of the negative electrode plate after charging, and the discharging thickness represents a thickness of the negative electrode plate after discharging; and the charging is carried out at 0.33 C to 4.25 V, and the discharging is carried out at 0.33 C to 2.5 V.

In some embodiments, the active substance includes at least one of a carbon-based material, a silicon-based material, a tin-based material, and an iron-based material.

In some embodiments, the active substance includes graphite and a silicon-based material.

In some embodiments, the active substance includes artificial graphite and a silicon-oxygen material.

In some embodiments, a mass ratio of the gel electrolyte to the liquid electrolyte is 7:3 to 9.5:0.5.

In some embodiments, the active layer includes a first active sublayer and a second active sublayer, which are arranged in a stacked manner, and the first active sublayer is closer to the negative electrode current collector than the second active sublayer; the first active sublayer and the second active sublayer both include the active substance, the gel electrolyte, and the liquid electrolyte; and the mass percentage of the gel electrolyte in the first active sublayer is greater than the mass percentage of the gel electrolyte in the second active sublayer.

In some embodiments, the mass percentage of the gel electrolyte in the first active sublayer is 90% to 95%.

In some embodiments, the mass percentage of the gel electrolyte in the second active sublayer is 70% to 90%.

In some embodiments, the mass percentage of the active substance in the first active sublayer is greater than the mass percentage of the active substance in the second active sublayer.

In some embodiments, the mass percentage of the active substance in the first active sublayer is 20% to 70%.

In some embodiments, the mass percentage of the active substance in the second active sublayer is 5% to 50%.

In some embodiments, a total volume of the gel electrolyte and the liquid electrolyte in the first active sublayer is greater than a total volume of the gel electrolyte and the liquid electrolyte in the second active sublayer.

In some embodiments, a volume of the liquid electrolyte in the first active sublayer is greater than a volume of the liquid electrolyte in the second active sublayer.

In some embodiments, Dv50 of the active substance in the first active sublayer is greater than Dv50 of the active substance in the second active sublayer.

In some embodiments, Dv50 of the active substance in the first active sublayer is 5 µm to 8 µm.

In some embodiments, Dv50 of the active substance in the second active sublayer is 3 µm to 7 µm.

In some embodiments, a thickness of the first active sublayer is 40 µm to 120 µm.

In some embodiments, a thickness of the second active sublayer is 40 µm to 120 µm.

The present application further provides a preparation method for a battery, including the following steps:
assembling a battery assembly including a negative electrode plate into a cell, where the negative electrode plate includes a negative electrode current collector and an active layer located on at least one surface of the negative electrode current collector;
injecting a first gel electrolyte solution into the cell such that the first gel electrolyte solution enters the active layer of the negative electrode plate to prepare a battery preform, where the first gel electrolyte solution includes a first polymerizable monomer, a first initiator, a first electrolyte salt, and a first solvent;
subjecting the battery preform to formation treatment; and
subjecting a product resulting from the formation treatment to first curing treatment.

In some embodiments, an expansion rate of the negative electrode plate is greater than or equal to 10%.

In some embodiments, the expansion rate of the negative electrode plate is 10% to 100%.

In some embodiments, the first curing treatment is controlled such that the first gel electrolyte solution entering the active layer of the negative electrode plate is partially cured.

In some embodiments, after partial curing, a mass ratio of a gel electrolyte to a liquid electrolyte in the active layer of the negative electrode plate is 7:3 to 9.5:0.5.

In some embodiments, the mass percentage of the first polymerizable monomer in the first gel electrolyte solution is 5% to 10%.

In some embodiments, after subjecting the product resulting from the formation treatment to the first curing treatment, the preparation method further includes:injecting a second gel electrolyte solution into the product resulting from the first curing treatment and carrying out a second curing treatment, where the second gel electrolyte solution includes a second polymerizable monomer, a second initiator, a second electrolyte salt, and a second solvent.

In some embodiments, the mass percentage of the first polymerizable monomer in the first gel electrolyte solution is less than the mass percentage of the second polymerizable monomer in the second gel electrolyte solution.

In some embodiments, the mass percentage of the first polymerizable monomer in the first gel electrolyte solution is 2% to 6%, and the mass percentage of the second polymerizable monomer in the second gel electrolyte solution is 5% to 10%.

In some embodiments, the mass ratio of the first gel electrolyte solution to the second gel electrolyte solution is 5:5 to 9:1.

In some embodiments, the active layer of the negative electrode plate includes a first active sublayer and a second active sublayer, which are arranged in a stacked manner, and the first active sublayer is closer to the negative electrode current collector than the second active sublayer; and the compaction density of the first active sublayer is less than the compaction density of the second active sublayer.

In some embodiments, the compaction density of the first active sublayer is 1.4 g/cm³ to 1.65 g/cm³.

In some embodiments, the compaction density of the second active sublayer is 1.5 g/cm³ to 1.75 g/cm³.

The present application further provides a powered device, including the battery or a battery prepared by the preparation method.

### BRIEF DESCRIPTION OF THE DRAWINGS

In order to provide a clearer explanation of the technical solution of the present application, a brief introduction will be given to the accompanying drawings used in the present application. It is evident that the accompanying drawings described below are only some embodiments of the present application. For those of ordinary skill in the art, other accompanying drawings can also be obtained based on the drawings without any creative effort.
FIG. 1 is a schematic view of a secondary battery according to an embodiment of the present application.
FIG. 2 is an exploded view of a secondary battery according to an embodiment of the present application as shown in FIG. 1.
FIG. 3 is a schematic view of a powered device in which a secondary battery serves as a power source according to an embodiment of the present application.

Description of reference numerals:
1. secondary battery; 11. shell body; 12. electrode assembly; 13. top cover assembly; and 2. powered device.

To better describe and illustrate embodiments and/or examples of the present invention disclosed herein, reference can be made to one or more accompanying drawings. Additional details or examples used to describe the accompanying drawings are not to be considered as limiting the scope of any of the disclosed invention, the currently described embodiments and/or examples, and the best modes of the present invention currently understood.

### DETAILED DESCRIPTION

For ease of understanding of the present application, the present application will be described below more completely with reference to the accompanying drawings. The accompanying drawings provide preferred embodiments of the present application. However, the present application can be implemented in various forms and is not limited to the embodiments described herein. On the contrary, these embodiments are provided for the purpose of more thoroughly and completely understanding the content disclosed by the present application.

Unless otherwise defined, all technical and scientific terms used herein have the same meanings as commonly understood by those skilled in the field to which the present application belongs. Herein, the terms used in the specification of the present application are only for the purpose of describing specific embodiments and is not intended to limit the present application. The term "and/or" used herein includes any and all combinations of one or more relevant items listed.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be carried out, either in order or randomly, preferably in order in some embodiments. For example, the method includes steps (a) and (b), which means that the method may include steps (a) and (b) performed in order, or may include steps (b) and (a) performed in order. For example, reference to "the method may further include step (c)" indicates that step (c) may be added to the method in any order, for example, the method may include steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. By way of example, the phrase "A or B" indicates "A, B, or both A and B". More specifically, any of the following conditions satisfies the condition "A or B":A is true or exists, and B is false or does not exist; A is false or does not exist, while B is true or exists; or A and B are both true, or A and B both exist.

Unless otherwise specified, the terms used in the present application have well-known meanings as commonly understood by those skilled in the art. Unless otherwise specified, the numerical values of various parameters mentioned in the present application can be measured by using various measurement methods as commonly used in the art. For example, the test can be carried out following the method in the embodiments of the present application.

Another embodiment of the present application provides a battery. A negative electrode plate of the battery includes a negative electrode current collector and an active layer. The active layer is located on at least one surface of the negative electrode current collector. The active layer includes an active substance, a gel electrolyte, and a liquid electrolyte. An expansion rate of the negative electrode plate is greater than or equal to 10%.

In this embodiment, the negative electrode plate is designed such that the active layer of the negative electrode plate includes an active substance, a gel electrolyte, and a liquid electrolyte, and the mass ratio of the gel electrolyte to the liquid electrolyte is in an appropriate range. In this case, when the active substance expands during cycling, the gel electrolyte can stably fix the liquid electrolyte in the negative electrode plate, thereby reducing the risk of squeezing-induced leakage of a liquid electrolyte solution due to the expansion of the active substance. Thus, the negative electrode plate can maintain a relatively stable kinetic performance, thereby improving the cycling performance of the battery. It can be understood that the gel electrolyte can be obtained by adding a polymer monomer and an initiator to a conventional electrolyte solution and then subjecting the mixture to a curing treatment. The liquid electrolyte can be a conventional electrolyte solution.

With the increasing demand of consumers for battery energy density, more and more negative electrode materials with high specific capacities have been applied to batteries. However, high specific capacity materials are often accompanied by higher expansion rates. For example, compared with graphite materials, silicon-based materials have a higher specific capacity, but the expansion rate thereof is also significantly higher than that of graphite materials. When these negative electrode materials with high specific capacities are used in batteries, the expansion of the materials will be more significant during cycling, and at this time the kinetic performance of the negative electrode plate will be more significantly reduced accordingly. When these materials with high specific capacity are used for the negative electrode active substance of the battery of the present application, the cooperation of the gel electrolyte and the liquid electrolyte can better compensate for the kinetic decline due to the expansion of the active substance, so that the negative electrode plate can maintain a stable kinetic performance, which is beneficial to improving the cycling performance of the battery and provides a new idea for improving the cycling performance of high energy density batteries.

In some embodiments, a mass ratio of the gel electrolyte to the liquid electrolyte is 7:3 to 9.5:0.5. Alternatively, the mass ratio of the gel electrolyte to the liquid electrolyte is 7:3, 7.5:2.5, 8:2, 8.5:1.5, 9:1, or 9.5:0.5.

In some embodiments, the expansion rate of the negative electrode plate is 10% to 100%. Alternatively, the expansion rate of the negative electrode plate is 10%, 20%, 30%, 40%, 50%, 60%, 70%, 80%, 90%, 100%, etc.

It can be understood that the expansion rate represents the rebound range of the negative electrode plate after the battery is charged and discharged. It can also be understood that the expansion rate of the negative electrode plate can be tested by measuring the thickness of the negative electrode plate after charging and discharging. For example, the expansion rate = (charging thickness - discharging thickness) / discharging thickness. The charging thickness represents the thickness of the negative electrode plate after charging, and the discharging thickness represents the thickness of the negative electrode plate after discharging. Alternatively, 0.33 C is used for charging to 4.25 volts (V), and 0.33 C is used for discharging to 2.5 V.

Alternatively, the active substance includes at least one of a carbon-based material, a silicon-based material, a tin-based material, and an iron-based material. Alternatively, the silicon-based material can be selected from at least one of elemental silicon, a silicon-oxygen compound, a silicon-carbon composite, a silicon-nitrogen composite, or a silicon alloy; the tin-based material can be selected from at least one of elemental tin, a tin-oxygen compound, or a tin alloy; and the iron-based material can be selected from at least one of elemental tin, an iron-oxygen compound, or an iron alloy. Further alternatively, the tin oxide includes stannic oxide; and the iron oxide includes ferric oxide.

In some embodiments, the active substance includes graphite and a silicon-based material. Furthermore, the active substance includes artificial graphite and a silicon-oxygen material.

It can be understood that the expansion rate of the negative electrode plate can be adjusted by adjusting the ratio of the materials in the active substance.

In some embodiments, the active layer includes a first active sublayer and a second active sublayer, which are arranged in a stacked manner, and the first active sublayer is closer to the negative electrode current collector than the second active sublayer; the first active sublayer and the second active sublayer both include the active substance, the gel electrolyte, and the liquid electrolyte; and a mass percentage of the gel electrolyte in the first active sublayer is greater than a mass percentage of the gel electrolyte in the second active sublayer. In this case, the first active sublayer contains a larger mass percentage of gel electrolyte than the second active sublayer, so that more liquid electrolyte can be maintained in the first active sublayer. That is, more liquid electrolyte can be maintained in the inner layer of the negative electrode plate. Thus, a more stable electrolyte environment can be formed in the inner layer of the negative electrode plate, so that the negative electrode plate can maintain a stable kinetic performance during cycling and help the battery maintain a better cycling stability during cycling. Alternatively, in the first active sublayer, the gel electrolyte is uniformly distributed; and in the second active sublayer, the gel electrolyte is uniformly distributed.

In some embodiments, the mass percentage of the gel electrolyte in the first active sublayer is 90% to 95%. For example, the mass percentage of the gel electrolyte in the first active sublayer is 90%, 90.5%, 91%, 91.5%, 92%, 92.5%, 93%, 93.5%, 94%, 94.5%, 95%, etc.

In some embodiments, the mass percentage of the gel electrolyte in the second active sublayer is 70% to 90%. For example, the mass percentage of the gel electrolyte in the second active sublayer is 70%, 71%, 72%, 73%, 74%, 75%, 76%, 77%, 78%, 79%, 80%, 81%, 82%, 83%, 84%, 85%, 86%, 87%, 88%, 89%, 90%, etc.

In some embodiments, the mass percentage of the active substance in the first active sublayer is greater than the mass percentage of the active substance in the second active sublayer. When the mass percentage of the active substance in the first active sublayer is greater than the mass percentage of the active substance in the first active sublayer, a larger porosity can be formed in the first active sublayer due to the expansion of the active substance during the charging and discharging process, and the first active sublayer can be filled with more gel electrolyte and liquid electrolyte, so as to maintain a more stable kinetic performance inside the electrode plate and further improve the cycling performance of the battery. Alternatively, the mass percentage of the active substance in the first active sublayer is 20% to 70%; and alternatively, the mass percentage of the active substance in the second active sublayer is 5% to 50%. Further alternatively, the mass percentage of the active substance in the first active layer is 20%, 25%, 30%, 35%, 40%, 45%, 50%, 55%, 60%, 65%, 70%, etc.; and the mass percentage of the active substance in the second active sublayer is 5%, 10%, 15%, 20%, 25%, 30%, 35%, 40%, 45%, 50%, etc.

In some embodiments, a total volume of the gel electrolyte and the liquid electrolyte in the first active sublayer is greater than a total volume of the gel electrolyte and the liquid electrolyte in the second active sublayer. Filling the first active sublayer with more gel electrolyte and liquid electrolyte can maintain a more stable kinetic performance inside the electrode plate and further improve the cycling performance of the battery. Alternatively, a volume of the liquid electrolyte in the first active sublayer is greater than a volume of the liquid electrolyte in the second active sublayer.

In some embodiments, Dv50 of the active substance in the first active sublayer is greater than Dv50 of the active substance in the second active sublayer. In this case, a larger porosity can be formed in the first active sublayer due to the expansion of the active substance during the charging and discharging process, and the first active sublayer can be filled with more gel electrolyte and liquid electrolyte, so as to maintain a more stable kinetic performance inside the electrode plate and further improve the cycling performance of the battery. Alternatively, Dv50 of the active substance in the first active sublayer is 5-8 microns (µm); and alternatively, Dv50 of the active substance in the second active sublayer is 3 µm to 7 µm. Still further alternatively, Dv50 of the active substance in the first active sublayer is 5 µm, 6 µm, 7 µm, 8 µm, etc.; and Dv50 of the active substance in the second active sublayer is 3 µm, 4 µm, 5 µm, 6 µm, 7 µm, etc.

It can be understood that in the present application, Dv50 refers to the corresponding particle size when the cumulative particle size distribution number of particles reaches 50% in a volume cumulative distribution curve. The physical meaning thereof is that particles with a particle size smaller than (or greater than) Dv50 account for 50%. By way of example, Dv50 can be determined conveniently by using a laser particle size analyzer, for example, Mastersizer 2000E laser particle size analyzer from Malvern Instruments Inc., UK, with reference to GB/T 19077-2016 Particle Size Analysis - Laser Diffraction Methods.

In some embodiments, a thickness of the first active sublayer is 40 µm to 120 µm. A thickness of the second active sublayer is 40 µm to 120 µm. When the thicknesses of the first active sublayer and the second active sublayer are within this range, the first active sublayer and the second active sublayer can be better matched, which is beneficial to improving the overall stability of the electrode plate and thus improving the cycling stability of the battery. Alternatively, the thickness of the first active sublayer is 40 µm, 50 µm, 60 µm, 70 µm, 80 µm, 90 µm, 100 µm, 110 µm, 120 µm, etc. Alternatively, the thickness of the second active sublayer is 40 µm, 50 µm, 60 µm, 70 µm, 80 µm, 90 µm, 100 µm, 110 µm, 120 µm, etc.

It can be understood that the battery of the present application includes a secondary battery.

Another embodiment of the present application provides a preparation method for a battery. The preparation method for a battery includes the following steps:assembling a battery assembly including a negative electrode plate into a cell, where the negative electrode plate includes a negative electrode current collector and an active layer located on at least one surface of the negative electrode current collector; injecting a first gel electrolyte solution into the cell such that the first gel electrolyte solution enters the active layer of the negative electrode plate to prepare a battery preform, where the first gel electrolyte solution includes a first polymerizable monomer, a first initiator, a first electrolyte salt, and a first solvent; subjecting the battery preform to formation treatment; and subjecting a product resulting from the formation treatment to first curing treatment.

In the preparation method of this embodiment, a first gel electrolyte solution is injected into a shell body. Due to the action of infiltration of the first gel electrolyte solution on the electrode plates, the first gel electrolyte enters the active layer of the negative electrode plate to prepare a battery preform. The battery preform is then subjected to formation treatment, and the product resulting from the formation treatment is subjected to first curing treatment. Thus, a gel electrolyte with relatively good uniformity and stability can be formed in the active layer of the negative electrode plate.

In some embodiments, an expansion rate of the negative electrode plate is greater than or equal to 10%. Alternatively, the expansion rate of the negative electrode plate is 10% to 100%. Alternatively, the expansion rate of the negative electrode plate is 10%, 20%, 30%, 40%, 50%, 60%, 70%, 80%, 90%, 100%, etc.

Alternatively, when the product resulting from the formation treatment is subjected to first curing treatment, the first curing treatment is controlled such that the first gel electrolyte solution entering the active layer of the negative electrode plate is partially cured. That is, the product resulting from the formation treatment is subjected to a partial curing treatment such that an environment in which the gel electrolyte and the liquid gel electrolyte solution coexist is formed in the active layer of the negative electrode plate. Thus, the kinetic performance of the electrode plate can be improved, and the cycling performance of the battery can thus be improved.

It can be understood that the ratio of the first polymerizable monomer to the first initiator to the first electrolyte salt added to the first gel electrolyte solution can be controlled such that there is still a certain amount of liquid electrolyte in the active layer of the electrode plate after the curing treatment.

In some embodiments, after partial curing, a mass ratio of a gel electrolyte to a liquid electrolyte in the active layer of the negative electrode plate is 7:3 to 9.5:0.5. Alternatively, after partial curing, the mass ratio of the gel electrolyte to the liquid electrolyte in the active layer of the negative electrode plate is 7:3, 7.5:2.5, 8:2, 8.5:1.5, 9:1, or 9.5:0.5.

In some embodiments, a mass percentage of the first polymerizable monomer in the first gel electrolyte solution is 5% to 10%. When the mass percentage of the first polymerizable monomer in the first gel electrolyte solution is within this range, a gel electrolyte having an appropriate proportion and cross-linking degree can be formed, which is beneficial to improving the dispersion uniformity and stability of the gel electrolyte in the active layer.

In some embodiments, after subjecting the product resulting from the formation treatment to the first curing treatment, the preparation method further includes:injecting a second gel electrolyte solution into the product resulting from the first curing treatment and carrying out a second curing treatment. The second gel electrolyte solution includes a second polymerizable monomer, a second initiator, a second electrolyte salt, and a second solvent. The dispersion uniformity of the gel electrolyte in the active layer can be improved by means of the two liquid injections combined with two curing treatments. For example, after the injection of the first gel electrolyte solution, the formation treatment, and the first curing treatment, a gel electrolyte with a network structure can be initially formed in the active layer. Then, when injecting the second gel electrolyte solution, the second gel electrolyte solution can further infiltrate into the active layer along the network structure formed by the first curing treatment. This is beneficial to improving the sufficiency of the gel electrolyte solution in infiltrating the active layer, thus improving the uniformity and stability of the gel electrolyte in the active layer.

It can be understood that the first gel electrolyte solution and the second gel electrolyte solution can be either the same or different. It can also be understood that the first polymerizable monomer and the second polymerizable monomer can be either the same or different. The first initiator and the second initiator can be either the same or different. The first electrolyte salt and the second electrolyte salt can be either the same or different. The first solvent and the second solvent can be either the same or different. It can also be understood that the conditions of the first curing treatment and the conditions of the second curing treatment can be either the same or different. It can also be understood that in some embodiments, the second curing treatment results in the second gel electrolyte solution being partially cured.

Alternatively, the first polymerizable monomer includes at least one of an ester monomer, an ether monomer, a carbonate monomer, a sulfone monomer, an isocyanate, an amide monomer, a nitrile monomer, a fluorinated monomer, an oligomer containing an ether segment, and a siloxane monomer. Further alternatively, the first polymerizable monomer includes at least one of methyl methacrylate, methyl acrylate, ethyl methacrylate, ethyl acrylate, n-butyl methacrylate, butyl acrylate, n-octyl methacrylate, n-octyl acrylate, vinyl acetate, ethylene carbonate, vinylethylene carbonate, triethylene glycol dimethacrylate, diethylene glycol dimethacrylate, ethylene glycol dimethacrylate, allyl methacrylate, divinylbenzene, polyvinyl alcohol, styrene, etc.

Alternatively, the first initiator includes at least one of a persulfate, an azo initiator, an organic peroxide initiator, etc. Further alternatively, the first initiator includes at least one of azodiisobutyronitrile, azodiisoheptylnitrile, benzoyl, dicumyl peroxide, dibenzoyl peroxide, and ammonium sulfide.

Alternatively, the second polymerizable monomer includes at least one of an ester monomer, an ether monomer, a carbonate monomer, a sulfone monomer, an isocyanate, an amide monomer, a nitrile monomer, a fluorinated monomer, an oligomer containing an ether segment, and a siloxane monomer. Further alternatively, the second polymerizable monomer includes at least one of methyl methacrylate, methyl acrylate, ethyl methacrylate, ethyl acrylate, n-butyl methacrylate, butyl acrylate, n-octyl methacrylate, n-octyl acrylate, vinyl acetate, ethylene carbonate, vinylethylene carbonate, triethylene glycol dimethacrylate, diethylene glycol dimethacrylate, ethylene glycol dimethacrylate, allyl methacrylate, divinylbenzene, polyvinyl alcohol, styrene, etc.

Alternatively, the second initiator includes at least one of a persulfate, an azo initiator, an organic peroxide initiator, etc. Further alternatively, the second initiator includes at least one of azodiisobutyronitrile, azodiisoheptylnitrile, benzoyl, dicumyl peroxide, dibenzoyl peroxide, and ammonium sulfide.

In some embodiments, the mass percentage of the first polymerizable monomer in the first gel electrolyte solution is less than the mass percentage of the second polymerizable monomer in the second gel electrolyte solution. In this case, a gel electrolyte with a relatively low crosslinking degree can be formed by the first curing treatment, and a gel electrolyte with a relatively high crosslinking degree can then be formed by the second curing treatment, so that the stability of the gel electrolyte in the battery can be further improved.

Alternatively, the mass percentage of the first polymerizable monomer in the first gel electrolyte solution is 2% to 6%, and the mass percentage of the second polymerizable monomer in the second gel electrolyte solution is 5% to 10%. Further alternatively, the mass percentage of the first polymerizable monomer in the first gel electrolyte solution is 2%, 3%, 4%, 5%, 6%, etc.; and the mass percentage of the second polymerizable monomer in the second gel electrolyte solution is 5%, 6%, 7%, 8%, 9%, 10%, etc.

In some embodiments, the mass ratio of the first gel electrolyte solution to the second gel electrolyte solution is 5:5-9:1. Alternatively, the mass ratio of the first gel electrolyte solution to the second gel electrolyte solution is 5:5, 6:4, 7:3, 8:2, 9:1, etc.

In some embodiments, the curing temperature of the first curing treatment is 60-80 degrees Celsius (°C). The time of the first curing treatment is 8-15 hours (h). Alternatively, the curing temperature of the first curing treatment is 60°C, 62°C, 65°C, 68°C, 70°C, 72°C, 75°C, 78°C, 80°C, etc. Alternatively, the time of the first curing treatment is 8 h, 9 h, 10 h, 11 h, 12 h, 13 h, 14 h, 15 h, etc.

In some embodiments, the curing temperature of the second curing treatment is 60-80°C. The time of the second curing treatment is 8-15 h. Alternatively, the curing temperature of the second curing treatment is 60°C, 62°C, 65°C, 68°C, 70°C, 72°C, 75°C, 78°C, 80°C, etc. Alternatively, the time of the second curing treatment is 8 h, 9 h, 10 h, 11 h, 12 h, 13 h, 14 h, 15 h, etc.

In some embodiments, the active layer of the negative electrode plate includes a first active sublayer and a second active sublayer, which are arranged in a stacked manner, and the first active sublayer is closer to the negative electrode current collector than the second active sublayer; the compaction density of the first active sublayer is less than the compaction density of the second active sublayer. In this case, a larger porosity can be formed in the first active sublayer due to the expansion of the active substance during the charging and discharging process, and the first active sublayer can be filled with more gel electrolyte and liquid electrolyte, so as to maintain a more stable kinetic performance inside the electrode plate and further improve the cycling performance of the battery. Alternatively, the compaction density of the first active sublayer is 1.4 grams/cubic centimeter (g/cm³) to 1.65 grams/cubic centimeter. Alternatively, the compaction density of the second active sublayer is 1.5 g/cm³ to 1.75 g/cm³. As some alternative examples, the compaction density of the first active sublayer is 1.4 g/cm³, 1.45 g/cm³, 1.5 g/cm³, 1.55 g/cm³, 1.6 g/cm³, 1.65 g/cm³, etc. The compaction density of the second active sublayer is 1.5 g/cm³, 1.55 g/cm³, 1.65 g/cm³, 1.7 g/cm³, 1.75 g/cm³, etc.

Another embodiment of the application provides a powered device. The powered device includes the above battery or a battery prepared by the above preparation method for a battery.

The secondary battery and the powered device of the present application are described below with reference to the accompanying drawings properly.

Generally, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role in conducting ions between the positive electrode plate and negative electrode plate. The separator is arranged between the positive electrode plate and the negative electrode plate and mainly serves to prevent a short circuit between the positive and negative electrodes while allowing ions to pass through.

### Positive electrode plate

The positive electrode plate includes a positive electrode current collector and a positive electrode film layer arranged on at least one surface of the positive electrode current collector, and the positive electrode film layer includes a positive electrode active material.

By way of example, the positive electrode current collector has two surfaces opposite to each other in a thickness direction of the positive electrode current collector, and the positive electrode active material layer is arranged on either or both of the two opposite surfaces of the positive electrode current collector.

In some embodiments, the positive electrode current collector can be a metal foil or a composite current collector. For example, as the metal foil, an aluminum foil can be used. The composite current collector can include a polymer material substrate layer and a metal layer formed on at least one surface of the polymer material substrate layer. The composite current collector can be formed by forming a metal material on the polymer material substrate. Alternatively, the metal material can include, but is not limited to, one or more of aluminum, an aluminum alloy, nickel, a nickel alloy, titanium, a titanium alloy, silver, and a silver alloy. Alternatively, the polymer material substrate can include, but is not limited to, one or more of polypropylene (PP), polyethylene terephthalate (PET), polybutylene terephthalate (PBT), polystyrene (PS), and polyethylene (PE).

By way of example, the positive electrode active material can include a positive electrode active material well-known in the art for batteries. By way of example, the positive electrode active material can include at least one of the following materials:a lithium-containing phosphate with an olivine structure, a lithium transition metal oxide, and respective modified compounds thereof. However, the present application is not limited to these materials. Other traditional materials that can be used as positive electrode active materials for batteries may also be used. Only a single one of or a combination of two or more of these positive electrode active materials can be used. Examples of the lithium transition metal oxide can include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Alternatively, the lithium cobalt oxide includes LiCoO₂; the lithium nickel oxide includes LiNiO₂; the lithium manganese oxide includes at least one of LiMnO₂ and LiMn₂O₄; the lithium nickel cobalt manganese oxide includes at least one of LiNi_{1/3}Co_{1/3}Mn_{1/3}O₂ (NCM₃₃₃), LiNi_{0.5}Co_{0.2}Mn_{0.3}O₂ (NCM₅₂₃), LiNi_{0.5}Co_{0.25}Mn_{0.25}O₂ (NCM₂₁₁), LiNi_{0.6}Co_{0.2}Mn_{0.2}O₂ (NCM₆₂₂), and LiNi_{0.8}Co_{0.1}Mn_{0.1}O₂ (NCM₈₁₁); and the lithium nickel cobalt aluminum oxide includes LiNi_{0.8}Co_{0.15}Al_{0.05}O₂. Examples of the lithium-containing phosphate with an olivine structure can include, but are not limited to, at least one of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon. Alternatively, the lithium iron phosphate includes LiFePO₄ (LFP); and the lithium manganese phosphate includes LiMnPO₄. The weight percentage of the positive electrode active material in the positive electrode film layer is 80 wt% to 100 weight% (wt%), based on the total weight of the positive electrode film layer.

In some embodiments, the positive electrode film layer further includes optionally a binder. By way of example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight percentage of the binder in the positive electrode film layer is 0 to 20 wt%, based on the total weight of the positive electrode film layer.

In some embodiments, the positive electrode film layer further includes optionally a conductive agent. By way of example, the conductive agent can include at least one of superconducting carbon, acetylene black, carbon black, Ketjen black, carbon dots, carbon nanotubes, graphene, and carbon nanofibers. The weight percentage of the conductive agent in the positive electrode film layer is 0 wt% to 20 wt%, based on the total weight of the positive electrode film layer.

In some embodiments, the positive electrode plate can be prepared by:dispersing the above components for preparing the positive electrode plate, for example, the positive electrode active material, the conductive agent, the binder, and any other components, in a solvent to form a positive electrode slurry. Alternatively, the solvent includes N-methylpyrrolidone. The positive electrode slurry has a solid content of 40 wt% to 80 wt% and a viscosity adjusted to 5000-25000 millipascal·second (mPa·s) at room temperature. The positive electrode slurry is applied to a surface of the positive electrode current collector, dried, and then cold-pressed by a cold rolling mill to form the positive electrode plate. The unit area density of the positive electrode powder coating is 150-350 milligrams/cubic centimeter (mg/m²), and the compaction density of the positive electrode plate is 3.0 g/cm³ to 3.6 g/cm³, optionally 3.4 g/cm³ to 3.6 g/cm³. The calculation formula of the compaction density is:the compaction density = the coating area density / (the thickness of the electrode plate after pressing - the thickness of the current collector).

### Negative electrode plate

The negative electrode plate includes a negative electrode current collector and a negative electrode film layer arranged on at least one surface of the negative electrode current collector, and the negative electrode film layer includes a negative electrode active material.

By way of example, the negative electrode current collector has two surfaces opposite to each other in a thickness direction of the negative electrode current collector, and the negative electrode film layer is arranged on either or both of the two opposite surfaces of the negative electrode current collector.

In some embodiments, the negative electrode current collector can be a metal foil or a composite current collector. For example, as the metal foil, a copper foil can be used. The composite current collector can include a polymer material substrate layer and a metal layer formed on at least one surface of the polymer material substrate. The composite current collector can be formed by forming a metal material on the polymer material substrate. Alternatively, the metal material includes at least one of copper, a copper alloy, nickel, a nickel alloy, titanium, a titanium alloy, silver, and a silver alloy; and the polymer material includes at least one of polypropylene (PP), polyethylene terephthalate (PET), polybutylene terephthalate (PBT), polystyrene (PS), and polyethylene (PE).

In some embodiments, the negative electrode active material can be a negative electrode active material well known in the art for batteries. By way of example, the negative electrode active material can include at least one of the following materials:artificial graphite, natural graphite, soft carbon, hard carbon, a silicon-based material, a tin-based material, lithium titanate, etc. The silicon-based material can be selected from at least one of elemental silicon, a silicon-oxygen compound, a silicon-carbon composite, a silicon-nitrogen composite, or a silicon alloy. The tin-based material can be selected from at least one of elemental tin, a tin-oxygen compound, or a tin alloy. However, the present application is not limited to these materials. Other traditional materials that can be used as negative electrode active materials for batteries may also be used. Only a single one of or a combination of two or more of these negative electrode active materials can be used. The weight percentage of the negative electrode active material in the negative electrode film layer is 70 wt% to 100 wt%, based on the total weight of the negative electrode film layer.

In some embodiments, the negative electrode film layer further includes optionally a binder. The binder can be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), poly(methyl methacrylate) (PMAA), and carboxymethyl chitosan (CMCS). The weight percentage of the binder in the negative electrode film layer is 0-30 weight%, based on the total weight of the negative electrode film layer.

In some embodiments, the negative electrode film layer further includes optionally a conductive agent. The conductive agent can be selected from at least one of superconducting carbon, acetylene black, carbon black, Ketjen black, carbon dots, carbon nanotubes, graphene, and carbon nanofibers. The weight percentage of the conductive agent in the negative electrode film layer is 0 to 20 wt%, based on the total weight of the negative electrode film layer.

In some embodiments, the negative electrode film layer further includes optionally other auxiliaries, for example, a thickener. The weight percentage of the other auxiliaries in the negative electrode film layer is 0 to 15 wt%, based on the total weight of the negative electrode film layer. Alternatively, the thickener includes sodium carboxymethylcellulose (CMC-Na).

In some embodiments, the negative electrode plate can be prepared by:dispersing the above components for preparing the negative electrode plate, for example, the negative electrode active material, the conductive agent, the binder, and any other components, in a solvent to form a negative electrode slurry. Alternatively, the solvent includes deionized water. The negative electrode slurry has a solid content of 30 wt% to 70 wt% and a viscosity adjusted to 2000-10000 mPa·s at room temperature. The obtained negative electrode slurry is applied to a surface of the negative electrode current collector, subjected to a drying procedure, and then cold-pressed, for example, by a roll press to form the negative electrode plate. The unit area density of the negative electrode powder coating is 75-220 grams/cubic meter (g/m²), and the compaction density of the negative electrode plate is 1.2 g/m³ to 2.0 g/m³.

### Electrolyte

The electrolyte plays a role in conducting ions between the positive electrode plate and negative electrode plate. The type of the electrolyte is not specifically limited in the present application and can be selected according to requirements. For example, the electrolyte can be liquid, gelled, or all solid.

In some embodiments, the electrolyte is an electrolyte solution. The electrolyte solution includes an electrolyte salt and a solvent.

In some embodiments, the electrolyte salt can be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP). The concentration of the electrolyte salt is generally 0.5-5 moles/liter (mol/L).

In some embodiments, the solvent can be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution further includes optionally an additive. For example, the additive can include a negative electrode film-forming additive and a positive electrode film-forming additive and can further include additives that can improve some properties of the battery, for example, an additive that improves the overcharging performance of the battery and an additive that improves the high- or low-temperature performance of the battery.

### Separator

In some embodiments, the secondary battery further includes a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can include an outer package. The outer packaging can be used for encapsulating the above electrode assembly and electrolyte.

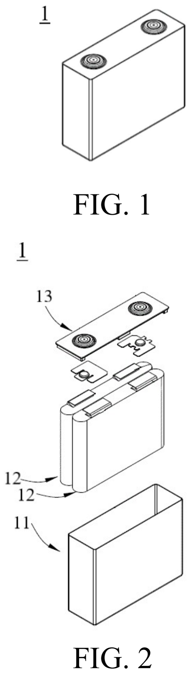

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc. The shape of the secondary battery is not particularly limited in the present application, and the secondary battery can be cylindrical, prismatic, or in any other shape. For example, FIG. 1 is a secondary battery 1 with a prismatic structure as an example.

In some embodiments, referring to FIG. 2, the outer package can include a shell body 11 and a top cover assembly 13. The shell body 11 can include a bottom plate and a side plate connected to the bottom plate, and the bottom plate and the side plate enclose to form an accommodating cavity. The shell body 11 has an opening in communication with the accommodating cavity, and the top cover assembly 13 can cover the opening to close the accommodating cavity. The positive electrode plate, the negative electrode plate, and the separator can be made into an electrode assembly 12 by a winding process or a lamination process. The electrode assembly 12 is encapsulated into the accommodating cavity. An electrolyte solution infiltrates into the electrode assembly 12. The number of electrode assemblies 12 contained in the secondary battery 1 can be one or more and can be selected by those skilled in the art according to specific actual requirements.

In addition, the present application further provides a powered device. The powered device includes the secondary battery provided by the present application. The secondary battery can be used as a power source for the powered device and can also be used as an energy storage unit for the powered device. The powered device can include, but is not limited to, a mobile apparatus (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the powered device, the secondary battery can be selected according to the requirements during use.

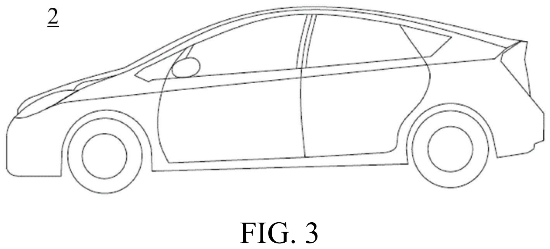

FIG. 3 is a powered device 2 as an example. The powered device is an all-electric vehicle, a hybrid electric vehicle, a plug-in hybrid electric vehicle, etc. To satisfy the need of the powered device for a high power and high energy density of secondary batteries, a battery pack or a battery module can be used.

The device used as another example can be, for example, a mobile phone, a tablet computer, a laptop, etc. The device is generally required to be light and thin and can use a secondary battery as a power source.

To make the technical problems to be solved by the present application, the technical solutions, and the beneficial effects clearer, the present application is further described below in detail with reference to embodiments and the accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

In embodiments in which no specific technologies or conditions are specified, technologies or conditions described in the literature in the art or product specifications are followed. The reagents or instruments used without manufacturer indicated are all commercially available conventional products.

### Example 1

### (1) Preparation of positive electrode plate.

A nickel cobalt manganese (NCM) ternary material, carbon black as a conductive agent, and polyvinylidene fluoride (PVDF) as a binder were added to N-methylpyrrolidone at a mass ratio of 97:1:2 and uniformly mixed and stirred to obtain a positive electrode slurry. The positive electrode slurry was uniformly applied to an aluminum foil, which acted as a positive electrode current collector, followed by drying, cold pressing, and slitting to obtain the positive electrode plate.

### (2) Preparation of negative electrode plate.

A silicon-oxygen material, artificial graphite, carbon black as a conductive agent, styrene-butadiene rubber (SBR) as a binder, and sodium hydroxymethylcellulose (CMC-Na) as a thickener were added to deionized water at a weight ratio of 38.8:58.2:0.5:1.25:1.25 and uniformly mixed and stirred to obtain a negative electrode slurry. The negative electrode slurry was uniformly applied to a copper foil, which acted as a negative electrode current collector, followed by drying, cold pressing, and slitting to obtain the negative electrode plate. Dv50 of the silicon-oxygen material was 7 µm, Dv50 of the artificial graphite was 6 µm, and the compaction density of the negative electrode active layer was 1.6 mg/cm³.

### (3) The separator was a polypropylene separator.

### (4) Preparation of gel electrolyte solution.

DMC, EMC, EC, methyl acrylate, and azodiisobutyronitrile were mixed in weight ratio of 58:30:4.5:7:0.5. The electrolyte salt in the gel electrolyte solution was LiPF₆, and the concentration of LiPF₆ was 1.1 mol/L.

### (5) Preparation of battery.

The positive electrode plate, the negative electrode plate, and the separator were assembled into a cell, and the cell was put into a shell body. The gel electrolyte solution was injected into the shell body, followed by infiltration at 25°C for 24 h, then formation, and then curing at 60°C for 15 h.

### Examples 2 and 3

Examples 2 and 3 were different from Example 1 in that negative electrode plates with different expansion rates were obtained by adjusting the weight ratio of the silicon-oxygen material to the artificial graphite. Details were as shown in Table 1.

### Examples 4-7

Examples 4-7 were different from Example 1 in that the ratio of the materials in the gel electrolyte solution was adjusted such that the mass percentages of the gel electrolyte and the liquid electrolyte in the obtained battery were different. Details were as shown in Table 1.

### Examples 8 and 9

Examples 8 and 9 were different from Example 1 in that the silicon-based material was replaced by stannic oxide and ferric oxide, respectively, and the expansion rate of the negative electrode plate was 40%. Details were as shown in Table 1.

### Example 10

This example was different from Example 1 in that the gel electrolyte solution was divided into a first gel electrolyte solution and a second gel electrolyte solution. The mass percentage of the polymerizable monomer in the first gel electrolyte was less than the mass percentage of the polymerizable monomer in the second gel electrolyte solution. The mass ratio of the first gel electrolyte solution to the second gel electrolyte solution was 5:5.

### Preparation of battery:

The positive electrode plate, the negative electrode plate, and the separator were assembled into a cell, and the cell was put into a shell body. A first gel electrolyte solution was injected into the shell body, followed by infiltration at 25°C for 24 h, then formation, first curing at 60°C for 15 h, then injection with the second gel electrolyte solution, infiltration at 25°C for 24 h, and then second curing at 60°C for 15 h.

### Example 11

Unlike Example 8, during the preparation of a battery in this example, the positive electrode plate, the negative electrode plate, and the separator were assembled into a cell, and the cell was put into a shell body. The second gel electrolyte solution was injected into the shell body, followed by infiltration at 25°C for 24 h, then formation, first curing at 60°C for 15 h, then injection with the first gel electrolyte solution, infiltration at 25°C for 24 h, and then second curing at 60°C for 15 h.

### Example 12

This example was different from Example 1 in that the preparation method for the battery was different.

### Preparation of battery:

The positive electrode plate, the negative electrode plate, and the separator were assembled into a cell, and the cell was put into a shell body. A gel electrolyte solution was injected into the shell body, followed by infiltration at 25°C for 24 h, curing at 60°C for 15 h, and then formation.

### Example 13

This example was different from Example 1 in that the preparation method for the negative electrode plate was different. Preparation of negative electrode plate of this example:
(1) First active sublayer slurry:A silicon-oxygen material, artificial graphite, carbon black as a conductive agent, styrene-butadiene rubber (SBR) as a binder, and sodium hydroxymethylcellulose (CMC-Na) as a thickener were added to deionized water at a weight ratio of 29.1:67.9:0.5:1.25:1.25 and uniformly mixed and stirred to obtain a negative electrode slurry. Dv50 of the silicon-oxygen material was 7 µm.
(2) Second active sublayer slurry:A silicon-oxygen material, artificial graphite, carbon black as a conductive agent, styrene-butadiene rubber (SBR) as a binder, and sodium hydroxymethylcellulose (CMC-Na) as a thickener were added to deionized water at a weight ratio of 38.8:58.2:0.5:1.25:1.25 and uniformly mixed and stirred to obtain a negative electrode slurry. Dv50 of the silicon-oxygen material was 6 µm.
(3) The negative electrode current collector was coated with the first active sublayer slurry and the second active sublayer slurry in order, dried, cold-pressed, and slit to obtain a negative electrode plate. The mass percentage of the gel electrolyte in the first active sublayer was greater than the mass percentage of the gel electrolyte in the second active sublayer, and the compaction density of the first active sublayer was less than the compaction density of the second active sublayer. Details were as shown in Table 2.

### Example 14

This example was different from Example 1 in that the preparation method for the negative electrode plate was different. Preparation of negative electrode plate of this example:
(1) First active sublayer slurry:A silicon-oxygen material, artificial graphite, carbon black as a conductive agent, styrene-butadiene rubber (SBR) as a binder, and sodium hydroxymethylcellulose (CMC-Na) as a thickener were added to deionized water at a weight ratio of 38.8:58.2:0.5:1.25:1.25 and uniformly mixed and stirred to obtain a negative electrode slurry. Dv50 of the silicon-oxygen material was 6 µm.
(2) Second active sublayer slurry:A silicon-oxygen material, artificial graphite, carbon black as a conductive agent, styrene-butadiene rubber (SBR) as a binder, and sodium hydroxymethylcellulose (CMC-Na) as a thickener were added to deionized water at a weight ratio of 29.1:67.9:0.5:1.25:1.25 and uniformly mixed and stirred to obtain a negative electrode slurry. Dv50 of the silicon-oxygen material was 7 µm.
(3) The negative electrode current collector was coated with the first active sublayer slurry and the second active sublayer slurry in order, dried, cold-pressed, and slit to obtain a negative electrode plate. The mass percentage of the gel electrolyte in the first active sublayer was less than the mass percentage of the gel electrolyte in the second active sublayer, and the compaction density of the first active sublayer was greater than the compaction density of the second active sublayer. Details were as shown in Table 2.

### Comparative Example 1

This comparative example was different from Example 1 in that the electrolyte solution did not include a polymerizable monomer and an initiator, and no curing was carried out after liquid injection.

### Test Example

The batteries in the examples and comparative examples were tested for cycling performance. Test Method:A battery was charged to 4.25 V at 0.33 C and then to 0.05 C at a constant voltage of 4.25 V to complete charging, and then discharged to 2.5 V at 0.33 C to complete one cycle of cycling. The battery was cycled for a number of cycles until the discharge capacity of the battery was 80% of the discharge capacity of the first cycle, and the number of cycles was recorded.

**Table 1**

| | Negative electrode active substance | Expansion rate of negative electrode plate | Mass ratio of gel electrolyte to liquid electrolyte in negative electrode active layer | Cycling performance (number of cycles) |
|---|---|---|---|---|
| Example 1 | Silicon-oxygen material + graphite | 40% | 8:2 | 1002 |
| Example 2 | Silicon-oxygen material + graphite | 30% | 8:2 | 1200 |
| Example 3 | Silicon-oxygen material + graphite | 50% | 8:2 | 790 |
| Example 4 | Silicon-oxygen material + graphite | 40% | 7:3 | 967 |
| Example 5 | Silicon-oxygen material + graphite | 40% | 9.5:5 | 956 |
| Example 6 | Silicon-oxygen material + graphite | 40% | 6:4 | 784 |
| Example 7 | Silicon-oxygen material + graphite | 40% | 9.8:0.2 | 698 |
| Example 8 | Stannic oxide + graphite | 40% | 8:2 | 876 |
| Example 9 | Ferric oxide + graphite | 40% | 8:2 | 798 |
| Example 10 | Silicon-oxygen material + graphite | 40% | 8:2 | 1289 |
| Example 11 | Silicon-oxygen material + graphite | 40% | 8:2 | 1143 |
| Example 12 | Silicon-oxygen material + graphite | 40% | 8:2 | 489 |
| Comparative Example 1 | Silicon-oxygen material + graphite | 40% | 0 | 398 |

**Table 2**

| | Dv50 of silicon-oxygen material (µm) | | Mass percentage of active substance | | Compaction density (g/cm³) | | Mass percentage of gel electrolyte | | Cycling performance (number of cycles) |
|---|---|---|---|---|---|---|---|---|---|
| | First active sublayer | Second active sublayer | First active sublayer | Second active sublayer | First active sublayer | Second active sublayer | First active sublayer | Second active sublayer | |
| Example 13 | 7 | 6 | 40% | 30% | 1.6 | 1.65 | 60% | 40% | 1165 |
| Example 14 | 6 | 7 | 30% | 40% | 1.65 | 1.6 | 40% | 60% | 865 |

As can be seen from Table 1, when the negative electrode active layer included a gel electrolyte and a liquid electrolyte, the cycling performance of the battery can be improved. When the expansion rate of the negative electrode active substance was relatively large, the cooperation of the gel electrolyte and the liquid electrolyte in the negative electrode active layer can further improve the cycling performance of the battery.

As can be seen from Examples 1 and 12 in Table 1, formation treatment and then a curing treatment were carried out on the battery preform, which is beneficial to improving the cycling performance of the battery.

As can be seen from Table 2, Dv50 of the active substance of the first active sublayer in the negative electrode active layer was greater than Dv50 of the active substance of the second active sublayer, which is beneficial to improving the cycling performance of the battery. The mass percentage of the active substance in the first active sublayer was greater than the mass percentage of the active substance in the second active sublayer, which is beneficial to improving the cycling performance of the battery. The mass percentage of the gel electrolyte in the first active sublayer was greater than the mass percentage of the gel electrolyte in the second active sublayer, which is beneficial to improving the cycling performance of the battery. The compaction density of the first active sublayer was less than the compaction density of the second active sublayer, which is beneficial to improving the cycling performance of the battery.

The technical features in the foregoing embodiments can be randomly combined. For the sake of brevity of description, not all possible combinations of the technical features in the above embodiments are described. However, as long as combinations of these technical features do not conflict with each other, these combinations are all considered as falling within the scope described in this specification.

The foregoing embodiments only describe several implementations of the present application, which are described relatively specifically and in detail. Thus, cannot be construed as a limitation to the scope of patent of the present invention. It should be noted that for those of ordinary skill in the art, a plurality of transformations and improvements can also be made without departing from the idea of the present application. These transformations and improvements all fall within the scope of protection of the present application. Therefore, the scope of protection of the patent of the present application shall be subject to the appended claims.

## Claims

1. A battery, comprising a negative electrode plate that comprises a negative electrode current collector and an active layer, wherein the active layer is located on at least one surface of the negative electrode current collector, the active layer comprises an active substance, a gel electrolyte, and a liquid electrolyte, and an expansion rate of the negative electrode plate is greater than or equal to 10%.

2. The battery according to claim 1, wherein the expansion rate of the negative electrode plate is 10% to 100%; and the expansion rate = (charging thickness - discharging thickness) / discharging thickness, in which the charging thickness represents a thickness of the negative electrode plate after charging, and the discharging thickness represents a thickness of the negative electrode plate after discharging; and the charging is carried out at 0.33 C to 4.25 V, and the discharging is carried out at 0.33 C to 2.5 V.

3. The battery according to claim 1 or 2, wherein a mass ratio of the gel electrolyte to the liquid electrolyte is 7:3 to 9.5:0.5.

4. The battery according to any one of claims 1 to 3, wherein the active substance comprises at least one of a carbon-based material, a silicon-based material, a tin-based material, and an iron-based material.

5. The battery according to any one of claims 1 to 4, wherein the active substance comprises graphite and a silicon-based material.

6. The battery according to any one of claims 1 to 5, wherein the active substance comprises artificial graphite and a silicon-oxygen material.

7. The battery according to any one of claims 1 to 6, wherein the active layer comprises a first active sublayer and a second active sublayer which are arranged in a stacked manner, and the first active sublayer is closer to the negative electrode current collector than the second active sublayer; the first active sublayer and the second active sublayer both comprise the active substance, the gel electrolyte, and the liquid electrolyte; and a mass percentage of the gel electrolyte in the first active sublayer is greater than a mass percentage of the gel electrolyte in the second active sublayer.

8. The battery according to claim 7, wherein the mass percentage of the gel electrolyte in the first active sublayer is 90% to 95%.

9. The battery according to claim 7 or 8, wherein the mass percentage of the gel electrolyte in the second active sublayer is 70% to 90%.

10. The battery according to any one of claims 7 to 9, wherein a mass percentage of the active substance in the first active sublayer is greater than a mass percentage of the active substance in the second active sublayer.

11. The battery according to claim 10, wherein the mass percentage of the active substance in the first active sublayer is 20% to 70%.

12. The battery according to claim 10 or 11, wherein the mass percentage of the active substance in the second active sublayer is 5% to 50%.

13. The battery according to any one of claims 7 to 12, wherein a total volume of the gel electrolyte and the liquid electrolyte in the first active sublayer is greater than a total volume of the gel electrolyte and the liquid electrolyte in the second active sublayer.

14. The battery according to claim 13, wherein a volume of the liquid electrolyte in the first active sublayer is greater than a volume of the liquid electrolyte in the second active sublayer.

15. The battery according to any one of claims 7 to 14, wherein Dv50 of the active substance in the first active sublayer is greater than Dv50 of the active substance in the second active sublayer.

16. The battery according to claim 15, wherein Dv50 of the active substance in the first active sublayer is 5 µm to 8 µm.

17. The battery according to claim 15 or 16, wherein Dv50 of the active substance in the second active sublayer is 3 µm to 7 µm.

18. The battery according to any one of claims 7 to 17, wherein a thickness of the first active sublayer is 40 µm to 120 µm; and/or a thickness of the second active sublayer is 40 µm to 120 µm.

19. A preparation method for a battery, comprising the following steps:
assembling a battery assembly comprising a negative electrode plate into a cell, wherein the negative electrode plate comprises a negative electrode current collector and an active layer located on at least one surface of the negative electrode current collector;
injecting a first gel electrolyte solution into the cell such that the first gel electrolyte solution enters the active layer of the negative electrode plate to prepare a battery preform, wherein the first gel electrolyte solution comprises a first polymerizable monomer, a first initiator, a first electrolyte salt, and a first solvent;
subjecting the battery preform to formation treatment; and
subjecting a product resulting from the formation treatment to first curing treatment.

20. The preparation method according to claim 19, wherein an expansion rate of the negative electrode plate is greater than or equal to 10%.

21. The preparation method according to claim 20, wherein the expansion rate of the negative electrode plate is 10% to 100%.

22. The preparation method according to any one of claims 19 to 21, wherein the first curing treatment is controlled such that the first gel electrolyte solution entering the active layer of the negative electrode plate is partially cured.

23. The preparation method according to claim 22, wherein after partial curing, a mass ratio of a gel electrolyte to a liquid electrolyte in the active layer of the negative electrode plate is 7:3 to 9.5:0.5.

24. The preparation method according to any one of claims 19 to 23, wherein a mass percentage of the first polymerizable monomer in the first gel electrolyte solution is 5% to 10%.

25. The preparation method according to any one of claims 19 to 24, wherein after the subjecting a product resulting from the formation treatment to first curing treatment, the preparation method further comprises:
injecting a second gel electrolyte solution into the product resulting from the first curing treatment and carrying out second curing treatment, wherein the second gel electrolyte solution comprises a second polymerizable monomer, a second initiator, a second electrolyte salt, and a second solvent.

26. The preparation method according to claim 25, wherein the mass percentage of the first polymerizable monomer in the first gel electrolyte solution is less than a mass percentage of the second polymerizable monomer in the second gel electrolyte solution.

27. The preparation method according to claim 25 or 26, wherein the mass percentage of the first polymerizable monomer in the first gel electrolyte solution is 2% to 6%, and the mass percentage of the second polymerizable monomer in the second gel electrolyte solution is 5% to 10%.

28. The preparation method according to any one of claims 25 to 27, wherein a mass ratio of the first gel electrolyte solution to the second gel electrolyte solution is 5:5 to 9:1.

29. The preparation method according to any one of claims 19 to 28, wherein the active layer of the negative electrode plate comprises a first active sublayer and a second active sublayer which are arranged in a stacked manner, and the first active sublayer is closer to the negative electrode current collector than the second active sublayer; and a compaction density of the first active sublayer is less than a compaction density of the second active sublayer.

30. The preparation method according to claim 29, wherein the compaction density of the first active sublayer is 1.4 g/cm³ to 1.65 g/cm³.

31. The preparation method according to claim 29 or 30, wherein the compaction density of the second active sublayer is 1.5 g/cm³ to 1.75 g/cm³.

32. A powered device, comprising the battery according to any one of claims 1 to 18 or a battery prepared by the preparation method according to any one of claims 19 to 31.
